# EUROPEAN PATENT APPLICATION

(11) **EP 4 502 805 A1**
(43) Date of publication of application: **05.02.2025**
(21) Application number: 24192106.3
(22) Date of filing: 31.07.2024
(51) Int. Cl.: G06F 9/50, G06N 20/00

(54) **SYSTEMS, METHODS, AND APPARATUS FOR ASSIGNING MACHINE LEARNING TASKS TO COMPUTE DEVICES**

(30) Priority: 02.08.2023 US 202363530471 P; 22.07.2024 US 202418780430
(71) Applicant: SAMSUNG ELECTRONICS CO., LTD., Yeongtong-gu Suwon-si, Gyeonggi-do 16677 (KR)
(72) Inventor: YI, Donny, San Jose, CA 95134 (US)
(74) Representative: Kuhnen & Wacker Patent- und Rechtsanwaltsbüro PartG mbB

(57) **Abstract**

A method may include determining a characteristic of a machine learning task, determining a characteristic of a compute system, wherein the compute system may include one or more compute devices, and assigning, based on the characteristic of the machine learning task and the characteristic of the compute system, the machine learning task to at least one of the one or more compute devices. The characteristic of the machine learning task may include at least one of a compatibility, priority, order, size, or type. The characteristic of the machine learning task may include at least one of a performance compatibility, efficiency compatibility, or a latency compatibility. The characteristic of the compute system may include at least one of a policy, topology, status, operating parameter, or scheduling algorithm. The characteristic of the compute system may include at least one of a performance policy or efficiency policy.

## Description

### TECHNICAL FIELD

This disclosure relates generally to compute devices, and more specifically to systems, methods, and apparatus for assigning machine learning tasks to compute devices.

### BACKGROUND

A compute system may use one or more compute devices to improve the performance of the system. Some compute workloads, such as machine learning workloads, may involve the use of models that may run on one or more compute devices. A model may be used, for example, to perform one or more machine learning tasks such as inferencing.

The above information disclosed in this Background section is only for enhancement of understanding of the background of the invention and therefore it may contain information that does not constitute prior art.

### SUMMARY

A method may include determining, by at least one processor, a characteristic of a machine learning task, determining, by the at least one processor, a characteristic of a compute system, wherein the compute system may include one or more compute devices, and assigning, by the at least one processor, based on the characteristic of the machine learning task and the characteristic of the compute system, the machine learning task to at least one of the one or more compute devices. The characteristic of the machine learning task may include at least one of a compatibility, priority, order, size, or type. The characteristic of the machine learning task may include at least one of a performance compatibility, efficiency compatibility, or a latency compatibility. The characteristic of the compute system may include at least one of a policy, topology, status, operating parameter, or scheduling algorithm. The characteristic of the compute system may include at least one of a performance policy or efficiency policy. The characteristic of the compute system may include a policy, the characteristic of the machine learning task may include a first compatibility, based on the policy, with a first one of the one or more compute devices, and a second compatibility, based on the policy, with a second one of the one or more compute devices, and the assigning may include assigning, based on the policy and the first compatibility, the machine learning task to the first one of the one or more compute devices. The characteristic of the compute system may include a first policy and a second policy, the characteristic of the machine learning task may include a first compatibility, based on the first policy, with a first one of the one or more compute devices, and a second compatibility, based on the second policy, with a second one of the one or more compute devices, and the assigning may include assigning, based on the first policy and the first compatibility, the machine learning task to the first one of the one or more compute devices. The machine learning task is a first machine learning task, the characteristic of the machine learning task is a first characteristic of the first machine learning task, and the assigning may include selecting, based on the first characteristic of the first machine learning task, a second characteristic of a second machine learning task, and a scheduling algorithm, the first machine learning task, and assigning, based on the selecting, the first machine learning task to the at least one of the one or more compute devices. The machine learning task is a first machine learning task, the method may further include modifying, based on a priority of the first machine learning task and a priority of a second machine learning task, an operation of the first machine learning task on the at least one of the one or more compute devices, and assigning, based on the modifying, the second machine learning task to the at least one of the one or more compute devices. The method may further include determining an operating status of the at least one of the one or more compute devices, and assigning, based on the operating status, the machine learning task to a data structure. The at least one of the one or more compute devices may include a first one of the one or more compute devices, the characteristic of the machine learning task may include a first compatibility with the first one of the one or more compute devices, and a second compatibility with a second one of the one or more compute devices, and the method may further include determining an operating status of the first one of the one or more compute devices, and assigning, based on the operating status and the second compatibility, the machine learning task to the second one of the one or more compute devices. The characteristic of the machine learning task may include a size of the machine learning task, and the assigning may include assigning, based on the size of the machine learning task, the machine learning task to the at least one of the one or more compute devices. The at least one of the one or more compute devices may include a first one of the one or more compute devices, and the method may further include modifying the characteristic of the compute system, and assigning, based on the modifying, the machine learning task to a second one of the one or more compute devices. The characteristic of the compute system may include a policy. The characteristic of the compute system may include an operating parameter.

A system may include at least one memory configured to store information for a machine learning task, a compute system comprising one or more compute devices, and at least one processor configured to determine, based on the information, a characteristic of the machine learning task, determine a characteristic of the compute system, and assign, based on the characteristic of the machine learning task and the characteristic of the compute system, the machine learning task to at least one of the one or more compute devices. The characteristic of the compute system may include a policy, the characteristic of the machine learning task may include a first compatibility, based on the policy, with a first one of the one or more compute devices, and a second compatibility, based on the policy, with a second one of the one or more compute devices, and the at least one processor may be configured to assign, based on the policy and the first compatibility, the machine learning task to the first one of the one or more compute devices. The characteristic of the compute system may include a first policy and a second policy, the characteristic of the machine learning task may include a first compatibility, based on the first policy, with a first one of the one or more compute devices, and a second compatibility, based on the second policy, with a second one of the one or more compute devices, and the at least one processor may be configured to assign, based on the first policy and the first compatibility, the machine learning task to the first one of the one or more compute devices.

An apparatus may include at least one memory configured to store information for a compute task, a compute system comprising one or more compute devices, and at least one processor configured to determine, based on the information, a characteristic of the compute task, determine a characteristic of the compute system, and assign, based on the characteristic of the compute task and the characteristic of the compute system, the compute task to at least one of the one or more compute devices. The characteristic of the compute task may include a performance compatibility with the at least one of the one or more compute devices.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a compute system in accordance with example embodiments of the disclosure.
Fig. 2 illustrates an example embodiment of a compute workload implemented on a computer system in accordance with example embodiments of the disclosure.
Fig. 3 illustrates an embodiment of a scheme for assigning one or more compute tasks to one or more compute devices in accordance with example embodiments of the disclosure.
Fig. 4 illustrates an example embodiment of a scheme for assigning one or more compute tasks to one or more compute devices in accordance with example embodiments of the disclosure.
Fig. 5 illustrates a flow chart of an embodiment of a method for assigning a compute task to a compute device in accordance with example embodiments of the disclosure.
Fig. 6 illustrates an example embodiment of a scheme for assigning one or more machine learning tasks to one or more compute devices in accordance with example embodiments of the disclosure.
Fig. 7 illustrates an embodiment of a compute system in accordance with example embodiments of the disclosure.
Fig. 8 illustrates an example embodiment of a computing system in accordance with example embodiments of the disclosure.

### DETAILED DESCRIPTION

A heterogeneous compute system may include various types of compute resources such as one or more central processing units (CPUs), graphics processing units (GPUs), neural processing units (NPUs), tensor processing units (TPUs), data processing units (DPUs), field programmable gate arrays (FPGAs), application specific circuits (ASICs), digital signal processors (DSPs), and/or the like. Some artificial intelligence (AI) and/or machine learning (ML) applications such as gaming, self-driving vehicles, augmented reality, and/or the like, may use multiple models that may perform various compute tasks such as object detection, image recognition, image generation, and/or the like. (For convenience, artificial intelligence and/or machine learning may be referred to collectively and/or individually as artificial intelligence and/or machine learning.) To run a machine learning application on a heterogeneous compute system, one or more tasks may be assigned to one or more compute resources. However, assigning a task to a compute resource that is not suitable for the task may result in relatively low performance (e.g., throughput, latency, bandwidth, efficiency, and/or the like), high power consumption, high operating cost, and/or the like.

A task assignment scheme in accordance with example embodiments of the disclosure may assign a machine learning task to a compute device based on one or more characteristics of the task, the device, a system in which the device may operate, and/or the like. For example, a scheduler for a heterogeneous compute system having different types of compute resources may receive a request to perform an inference task using a machine learning model. The scheduler may use task assignment logic to assign the inference task to a compute device that may be suitable for the task based, for example, on one or more characteristics of the inference task and/or one or more characteristics of the system.

Examples of task characteristics may include task compatibility (e.g., a compatibility of a task with a specific type of compute device), task priority (e.g., a relative level of importance of a task compared, for example, to one or more other tasks, applications, and/or the like), and/or a task size (e.g., a size of a model used by the task, a data set used by the task, and/or the like).

Examples of system characteristics may include one or more system policies (e.g., adjusting the system for performance, energy efficiency, and/or the like), one or more compute device topologies (e.g., characteristics such as the types, numbers, and/or capabilities of devices in the system), hardware utilization (e.g., busyness of one or more compute devices in the system as a percentage of capacity for throughput, bandwidth, and/or the like), and/or system or device status (e.g., power gating, thermal throttling, operating frequency, and/or the like).

In some embodiments, a task assignment scheme may use one or more data structures to determine one or more characteristics on which to base a task assignment. For example, a task assignment scheme may build, maintain, use, and/or the like, one or more data structures for information relating to characteristics of tasks, applications, systems, devices, and/or the like.

Information stored in the one or more data structures may be received, obtained, captured, and/or the like, from various sources and/or using various techniques. For example, information on one or more task characteristics may be obtained from a task software context (e.g., an application context), received from a user (e.g., passed as a parameter for a task request), and/or the like. Task characteristics may be received, obtained, and/or the like, at any time such as during a system boot, while loading an application, when receiving a task request, and/or the like.

As another example, information on one or more system characteristics may be obtained from a compute device, firmware (e.g., system firmware, device firmware, and/or the like), a system management controller, and/or the like. System characteristics may be obtained at system boot (e.g., by polling agents (e.g., compute devices) on a system bus, interconnect, and/or the like) to identify compute devices that may be installed in the system, when hot plugging a compute device, when loading and/or updating a driver for a device, and/or the like.

In some embodiments, the one or more data structures may be implemented in any form, for example, tables, trees, linked lists, and/or the like. The one or more data structures may be stored in any form and/or medium such as software data structures stored in shared memory, hardware data structures stored in registers, and/or the like.

This disclosure encompasses numerous aspects relating to the assignment of compute tasks to compute devices. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

For purposes of illustration, some embodiments may be described in the context of some specific implementation details such as specific types of compute tasks, compute devices, compute resources, data connections, component configurations, and/or the like. However, the aspects of the disclosure are not limited to these or any other implementation details.

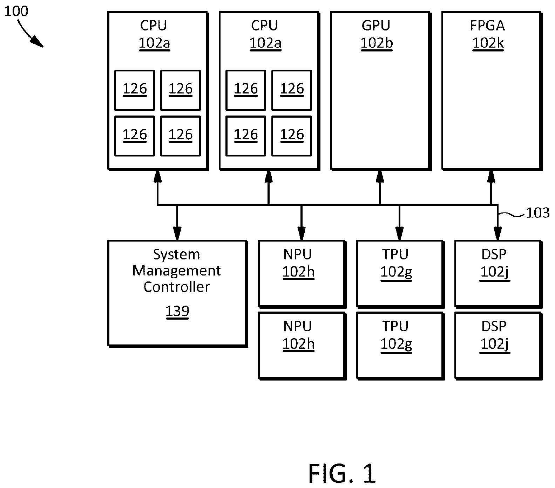

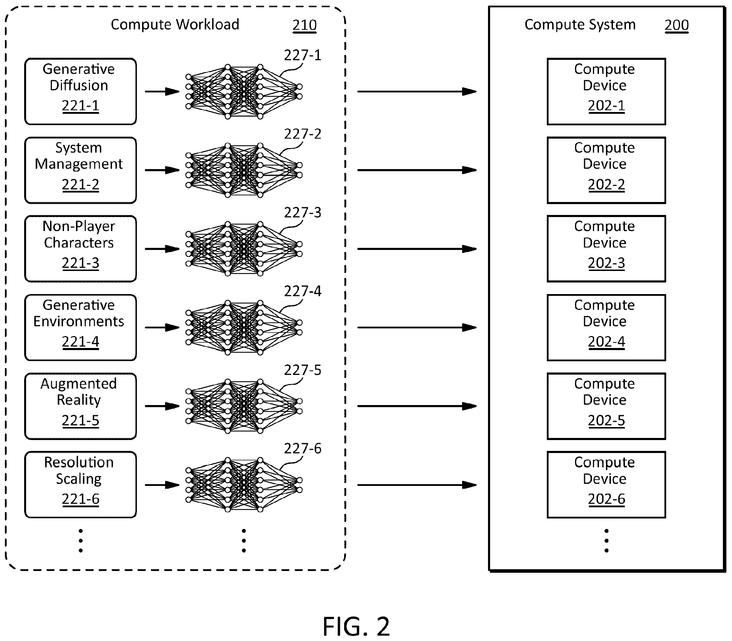

In some drawing figures, elements similar to those illustrated in other figures may be indicated by reference numbers ending in, and/or containing, the same digits, letters, and/or the like. Multiple instances of elements identified in this disclosure using the same base numbers and different suffixes may be referred to individually and/or collectively by the base number. For example, one or more compute devices 102a, 102b, ... illustrated in Fig. 1 may be referred to individually and/or collectively as compute device(s) 102. As another example, one or more inference tasks 221-1, 221-2, .... illustrated in Fig. 2 may be referred to individually and/or collectively as inference task(s) 221.

Fig. 1 illustrates an embodiment of a compute system in accordance with example embodiments of the disclosure. The compute system 100 illustrated in Fig. 1 may include a system management controller 139 and one or more compute devices such as one or more CPUs 102a, GPUs 102b, TPUs 102g, NPUs 102h, digital signal processors (DSPs) 102j, FPGAs 102k, and/or the like. Any or all of the components illustrated in Fig. 1 may communicate using one or more communication connections 103.

Although the compute system 100 illustrated in Fig. 1 is not limited to any specific physical configuration, in some embodiments, some or all of the components of the compute system 100 may be implemented with a system-on-chip (SoC). Additionally, or alternatively, some or all of the components of the compute system 100 may be implemented with a system-in-package (SIP). For example, in some embodiments, one or more CPUs 102a, GPUs 102b, TPUs 102g, NPUs 102h, digital signal processors (DSPs) 102j, and/or FPGAs 102k may be implemented as integrated circuit (IC) chips (which may also be referred to as chiplets, dies, and/or the like) attached to a package substrate and configured to communicate using one or more communication connections 103 that may be implemented with one or more die-to-die (D2D) interconnects. In such an embodiment, the system management controller 139 may be implemented with a separate chip and/or as part of one or more IC chips, e.g., as part of one or more CPUs 102a. One or more CPUs 102a may be implemented as a CPU cluster (e.g., including one or more CPU cores 126). Additionally, or alternatively, some or all of the components of the compute system 100 may be implemented in any other form including one or more personal computers, workstations, smart phones, tablet computers, servers, server chassis, modules, server racks, datarooms, datacenters, edge datacenters, mobile edge datacenters, and/or any combinations thereof, and in any form factors such as adapter card form factors (e.g., PCIe adapter cards), storage device form factors, and/or the like.

Fig. 2 illustrates an example embodiment of a compute workload implemented on a computer system in accordance with example embodiments of the disclosure. For purposes of illustration, the compute workload 210 is shown as a gaming workload with one or more compute tasks (which may also be referred to as tasks) implemented as one or more AI inference tasks. In other embodiments, however, the compute workload 210 may include any type of compute tasks, including one or more of any type of algorithm, data movement, data management, data selection, filtering, encryption and/or decryption, compression and/or decompression, checksum calculation, hash value calculation, cyclic redundancy check (CRC), weight calculations, activation function calculations, training, inference (e.g., generative and/or predictive), classification, regression, clustering, and/or the like, for AI, ML, neural networks, deep learning, and/or the like.

Referring to Fig. 2, the gaming compute workload 210 may include one or more compute tasks that may be implemented as AI inference tasks 221-1, 221-2, .... For example, a generative diffusion (e.g., art) task 221-1 may generate visuals such as background scenery, a system management task 221-2 may control the overall operation of a game, a gaming system, and/or the like, a non-player characters (NPC) task 221-3 may control the operation of one or more non-player characters that may interact with one or more players, a generative environments task 221-4 may generate non-player characters, situations, challenges, backgrounds, and/or the like, an augmented reality (AR) task 221-5 may integrate one or more elements of a player's physical environment into a game, and/or a resolution scaling task 221-6 may implement one or more scaling operations (e.g., upscaling and/or downscaling) to increase and/or decrease the resolution of an image to fit a screen space that may have a larger or smaller resolution than the image.

Other examples of AI workloads may include automotive (e.g., self-driving vehicles), mobile devices, AR devices, edge computing applications, and/or the like. In an embodiment of a self-driving vehicle workload, examples of AI inference tasks may include a task to identify the presence and/or state of traffic lights, a task to detect lines, lanes, and/or the like, on a road, a task to detect other vehicles, a task to detect pedestrians, and/or a task to make driving decisions based on one or more data sources (such as one or more types of sensor data) and/or outputs from other tasks.

The AI inference tasks 221-1, 221-2, ... may be implemented with one or more inference models 227-1, 227-2, ..., respectively. Examples of inference models 227 may include neural networks (e.g., convolutional, feed-forward, recurrent, and/or the like), decision trees, random forests, regressions (e.g., linear, logistic, and/or the like), support vector machines, large language models, and/or the like. The inference models 227-1, 227-2, ... may run on one or more compute devices 202 in a compute system 200.

However, determining which inference task 221 and/or inference model 227 to run on which compute device 202 may be challenging, especially with workloads such as gaming, self-driving vehicles, and/or the like, in which multiple tasks, and/or models may run simultaneously. A task may have one or more device compatibilities (which may also be referred to as device affinities). Moreover, a task may have one or more different types of compatibilities with one or more different types of compute devices. For example, a visual generation task may have a performance (e.g., speed) compatibility with a GPU because the task may run relatively fast (e.g., have a highest throughput) on a GPU. However, the same task may have an efficiency compatibility with an FPGA because the task may have a relatively low power consumption (e.g., may run most efficiently) on an FPGA. As a further example, a system management task that may perform a database lookup may have a latency compatibility with a data processing unit (DPU) because the DPU may retrieve requested data with a relatively low latency (e.g., shortest delay).

Determining which inference task 221 and/or inference model 227 to run on which compute device 202 may also involve further challenges relating to considerations of one or more characteristics of the compute system 200 and/or compute device(s) 202. Examples of such considerations may include a topology of the compute system 200 (e.g., the numbers, types, arrangements, and/or the like) of the compute device(s) 202), a hardware utilization (e.g., the busyness of one or more compute devices 202), and/or the like. Moreover, the compute workload 210 may be created, programmed, and/or the like, without knowledge of a topology of the compute system 200 on which it may be executed. For example, a gaming workload may be designed for a specific (e.g., fixed) hardware configuration such as a gaming computer with a CPU and a GPU, but may eventually be executed on a compute system having different compute devices such as a smart phone that may be implemented with an SoC and/or SIP such as that illustrated and/or described with respect to Fig. 1.

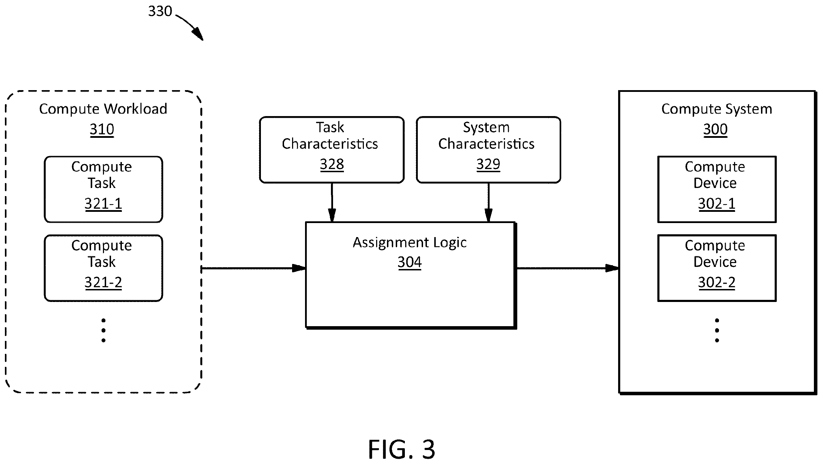

Fig. 3 illustrates an embodiment of a scheme for assigning one or more compute tasks to one or more compute devices in accordance with example embodiments of the disclosure. In the scheme 330 illustrated in Fig. 3, assignment logic 304 may assign one or more compute tasks 321 in a compute workload 310 to one or more compute devices 302 in a compute system 300 based on one or more task characteristics 328 and/or one or more system characteristics 329.

Examples of task characteristics 328 may include one or more device compatibilities (e.g., performance compatibility, efficiency compatibility, latency compatibility), task size (e.g., size of a model used to perform the task, amount of data used as input to and/or output from, the task, and/or the like), task type (e.g., training, inference, data movement, data selection, compression, encryption, and/or the like), task priority, and/or the like. In some embodiments, a device compatibility may be expressed as one or more lists (possibly ordered and/or possibly based on a type of compatibility) of one or more devices on which the task may be performed.

Examples of system characteristics 329 may include one or more system policies (e.g., a performance policy, an efficiency policy, a balanced policy, and/or the like), a system topology (e.g., the numbers, types, arrangements, and/or the like) of the compute device(s) 302), one or more operating statuses (e.g., busy status, power gated status, thermal throttling status, and/or the like of one or more compute devices and/or communication connections between devices), operating parameters (e.g., clock speed of one or more devices), a hardware utilization (e.g., percent of compute resources, capacity, and/or the like of one or more compute devices 302), and/or the like.

Although the assignment logic 304 is not limited to any specific implementation details, in some embodiments, the assignment logic 304 may be implemented with a scheduler such as an operating system scheduler. in some embodiments, some or all of the task assignment functionality associated with the assignment logic 304 may be implemented with an extension, modification, plug-in, and/or the like, for an operating system scheduler.

In some embodiments, the task assignment scheme 330 illustrated in Fig. 3 may exploit one or more compute task compatibilities which, depending on the implementation details, may improve the operation of the compute system 300 and/or one or more compute devices 302, for example, by matching one or more compute tasks 321 to one or more compute devices 302 on which the compute task 321 may have improved (e.g., optimized) performance, efficiency, latency, and/or the like.

Additionally, or alternatively, the task assignment scheme 330 may improve the utilization of the compute system 300 and/or one or more compute devices 302, for example, by providing a flexible scheme for assigning one or more compute tasks 321 to a heterogeneous system topology.

Additionally, or alternatively, the task assignment scheme 330 may improve the operation of the compute system 300 and/or one or more compute devices 302 by enabling the operation of the system 300 and/or one or more compute devices 302 to be tuned to a specific operating target such as a performance target, efficiency (e.g., power consumption) target, and/or the like. For example, in some embodiments, a system policy may be modified (e.g., during execution of one or more compute tasks 321) by changing from a first (e.g., performance) policy to a second (e.g., efficiency) policy. Based on a change in system policy, one or more compute tasks 321 may be reassigned to one or more different compute devices 302 to implement the modified system policy (e.g., to tune the compute system 300 and/or one or more compute devices 302 to a modified operating target).

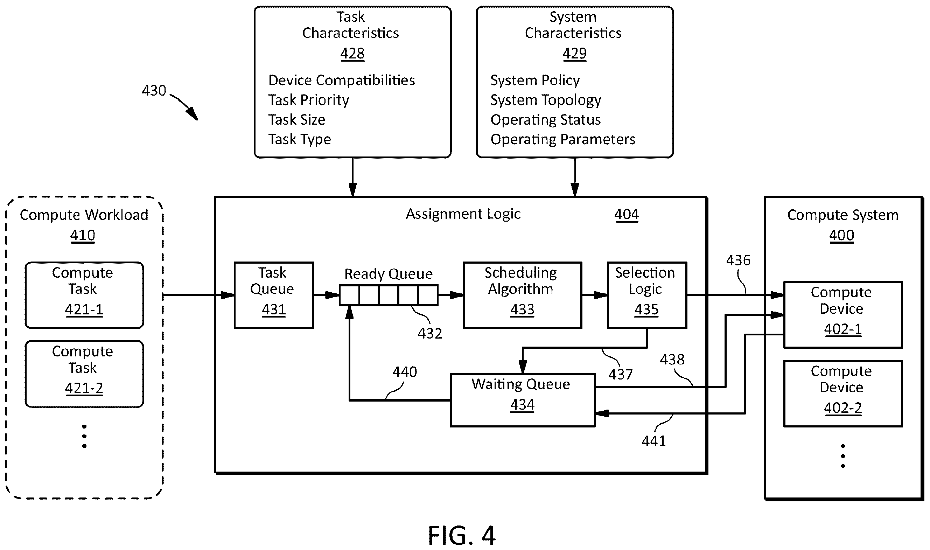

Fig. 4 illustrates an example embodiment of a scheme for assigning one or more compute tasks to one or more compute devices in accordance with example embodiments of the disclosure. The scheme 430 illustrated in Fig. 4 may be used to implement, and/or may be implemented with, any of the assignment schemes disclosed herein, including those described with respect to other drawings in which similar elements may be indicated by reference numbers ending in, and/or containing, the same digits, letters, and/or the like. For example, the scheme 430 illustrated in Fig. 4 may be used to implement the compute task assignment scheme 330 illustrated in Fig. 3.

Referring to Fig. 4, the task assignment scheme 430 may include assignment logic 404 which may assign one or more compute tasks 421 in a compute workload 410 to one or more compute devices 402 in a compute system 400 based on one or more task characteristics 428 and/or one or more system characteristics 429.

Examples of task characteristics 428 may include device compatibilities, task priority, task size, task type, and/or the like. For example, a device compatibility for a specific compute task may include a device compatibility data structure having a first list of devices with which the task may have a performance compatibility. The first list may include a first entry for a first device (e.g., a GPU generally or a first type, model, and/or the like, of GPU) which may indicate that the task may operate with a first performance (e.g., a best or fastest performance) on the first device, a second entry for a second device (e.g., an NPU generally or a second type, model, and/or the like of GPU) which may indicate that the task may operate with a second performance (e.g., a second best or second fasted performance) on the second device, and a third entry for a third device (e.g., an FPGA generally or a third type, model, and/or the like, of GPU) which may indicate that the task may operate with a third performance (e.g., a third best or third fastest performance) on the third device.

In some embodiments, the device compatibility data structure may include a second list of devices with which the task may have an efficiency compatibility. The second list may include a first entry for a first device (e.g., an FPGA generally or a first type, model, configuration (e.g., program) and/or the like, of FPGA) which may indicate that the task may operate with a first efficiency (e.g., a best or highest efficiency) on the first device, a second entry for a second device (e.g., a CPU generally or a second type, model, configuration (e.g., program) and/or the like, of FPGA) which may indicate that the task may operate with a second efficiency (e.g., a second best or second highest efficiency) on the second device, and a third entry for a third device (e.g., a GPU generally or a third type, model, configuration (e.g., program) and/or the like, of FPGA) which may indicate that the task may operate with a third efficiency (e.g., a third best or third highest efficiency) on the third device.

Similarly, in some embodiments, the device compatibility data structure may include a third list of devices with which the task may have a latency compatibility (e.g., different latencies).

Examples of a task priority may include a numerical value (e.g., an integer) indicating an importance (e.g., a relative importance) of the task. For example, in a gaming application (e.g., a gaming workload), a generative environment task may have a relatively high priority to prevent stutter in a gaming environment. As another example, a first task having one or more data dependencies from it (e.g., one or more other tasks may use output data from the first task as input data) may have a relatively high priority to prevent the one or more other tasks from waiting while the first task executes.

Examples of task types may include any type of algorithm (e.g., engineering and/or scientific calculations), modeling (e.g., 2D and/or 3D modeling for artwork, design, and/or the like), audio and/or video processing (e.g., voice and/or image recognition, resolution scaling, and/or the like), augmented reality, data movement, data management (e.g., database management), data selection, filtering, encryption and/or decryption, compression and/or decompression, checksum calculation, hash value calculation, cyclic redundancy check (CRC), weight calculations, activation function calculations, training, inference (e.g., generative and/or predictive), classification, regression, clustering, and/or the like, for AI, ML, neural networks, deep learning, and/or the like.

A task size may be based, for example, at least in part, on a size of a model (e.g., size of a neural network, numbers of neurons, layers, connections, activation functions, weights, nodes, edges, complexity of an algorithm (e.g., a regression equation), size of a decision tree, size of a random forest, and/or the like). As another example, a task size may be based, at least in part, on an amount of input data used by a task, an amount of intermediate data used by a task (e.g., in a scratchpad memory), an amount of output data generated by a task, and/or the like.

Examples of system characteristics 429 may include one or more system policies, a system (e.g., device) topology, one or more operating statuses, parameters, utilizations, and/or the like, of a compute system 400 and/or one or more compute devices 402, and/or the like.

Examples of system policies may include a performance policy in which the assignment logic 404 may attempt to increase (e.g., maximize or optimize) an overall performance (e.g., throughput) of one or more (e.g., all) compute devices 402 in the compute system 400. Another example may include an efficiency (e.g., power saving) policy in which the assignment logic 404 may attempt to increase the energy efficiency (e.g., reduce the power consumption) of one or more compute devices 402 in the compute system 400. A further example may include a balanced policy in which the assignment logic 404 may attempt to maintain an overall performance (e.g., throughput) of the compute system 400 and/or one or more compute devices 402 at a certain level (e.g., a target performance level) while preventing the power consumption of the compute system 400 and/or one or more compute devices 402 from exceeding a certain level (e.g., a maximum power consumption level).

In some embodiments, a system topology may include one or more numbers, types, arrangements, and/or the like, of the compute device 402 in the compute system 400. An example system topology may include the number and/or arrangement of compute devices 102 illustrated in Fig. 1, as well as a topology (e.g., number, type, arrangement, and/or the like) of communication connections 103 illustrated in Fig. 1.

An example of an operating status may include a utilization (e.g., a busyness) of the compute system 400 and/or one or more compute devices 402 which may be expressed, for example, as one or more binary values (e.g., busy or not busy), one or more percentages (e.g., a percent of overall compute resources of the compute system 400 that may be utilized, a percent of compute resources (e.g., cores) of a compute device 402 that may be utilized, a percent of data transfer bandwidth to and/or from the system 400 and/or between compute devices 402 that may be utilized, and/or the like.

Additional examples of an operating status may include a power gated status, a thermal throttling status, and/or the like, of the compute system 400 and/or one or more compute devices 402 and/or communication connections to, from, and/or between compute devices 402.

An example of an operating parameter may include a clock speed of one or more compute devices 402. For example, in some embodiments, the assignment logic 404 and/or a system management controller (e.g., system management controller 139 illustrated in Fig. 1) may reassign one or more compute tasks 421 and/or adjust one or more clock speeds of one or more compute devices 402 to tune the compute system 400 to achieve a target performance level and/or a target energy efficiency.

Any of the task characteristics 428 and/or system characteristics 429 may be stored in, managed by, and/or the like, software, hardware, or a combination thereof. For example, in some embodiments, one or more task characteristics 428 may be stored in one or more data structures in a task software context that may be assigned by an operating system, system level software, and/or the like. In such embodiments, an operating system, system level software, and/or the like may collect and/or populate one or more task characteristics 428 manually using a user interface (e.g., a configuration utility), programmatically (e.g., using an application programming interface (API)), and/or the like. In some embodiments, a system management controller may collect (e.g., capture) one or more task characteristics 428 by searching through code in, and/or observing one or more operations of, one or more applications, compute workloads, compute tasks, and/or the like.

As another example, one or more system characteristics 429 may be stored in firmware (e.g., system firmware, device firmware, and/or the like), in one or more hardware structures such as one or more registers (e.g., in an SoC, SIP, and/or the like), in a shared memory region that may be managed and/or accessed (e.g., read and/or written) by hardware, software, firmware or a combination thereof. In some embodiments, one or more system characteristics 429 may be collected and/or populated manually using a user interface (e.g., a configuration utility), programmatically (e.g., using an application programming interface (API)), and/or the like. In some embodiments, a system management controller may collect (e.g., capture) one or more system characteristics 429 by searching through code for (e.g., one or more device drivers for), and/or observing one or more operations of, one or more compute devices.

In the embodiment illustrated in Fig. 4, the assignment logic 404 may include a task queue 431, a ready queue 432, a scheduling algorithm 433, selection logic 435, and/or a waiting queue 434 which may be referred to, and/or characterized as, collectively a scheduler and/or scheduling logic. Any or all of the task queue 431, a ready queue 432, and/or waiting queue 434 may be implemented with any type of configuration such as a first-in-first-out (FIFO), first-in-last-out (FILO) (e.g., a stack), a circular queue, and/or the like.

In some embodiments, the task queue 431 may be used to store one or more of the compute tasks 421 that may not be ready for execution. For example, a compute task 421 may have an operational and/or data dependency on another compute task 421, a user input, input data received from outside the compute system 400, and/or the like. The assignment logic 404 may store a compute task 421 in the task queue 431 until the dependency is resolved (e.g., data on which the compute task 421 depends becomes available) and move the compute task 421 from the task queue 431 to the ready queue 432 based on resolving the dependency.

In some embodiments, the ready queue 432 may hold one or more compute tasks 421 that may be ready for execution on one or more compute devices 402.

The scheduling algorithm 433 may determine an order in which to schedule one or more compute tasks 421 stored in the ready queue 432. The scheduling algorithm 433 may be implemented, for example, using a first-come-first-serve (FCFS) algorithm in which one or more compute tasks 421 may be scheduled in the order in which they are placed in the ready queue 432 (e.g., implementing the ready queue 432 as a FIFO queue). As another example, the scheduling algorithm 433 may be implemented with a priority scheduling algorithm in which one or more compute tasks 421 may be scheduled in an order based on their relative priorities (e.g., a task with a highest priority may be scheduled next). As a further example, the scheduling algorithm 433 may be implemented with a round robin algorithm in which one or more compute tasks 421 may be scheduled by rotating through entries in the ready queue 432 (e.g., without regard to order of placement, priority, and/or the like), by rotating through a source of entries in the ready queue 432 (e.g., by rotating through one or more applications, processes, virtual machines, and/or the like, that may place entries in the ready queue 432). As yet another example, the scheduling algorithm 433 may be implemented with a shortest task next (STN) (which may also be referred to as shortest job next (SJN)) algorithm in which a task having a smallest size may be scheduled next.

For purposes of illustration, the scheduling algorithm 433 may be assumed to determine that compute task 421-1 is the next compute task to be assigned (e.g., scheduled).

Based on the scheduling algorithm 433 determining an assignment order (e.g., once the next compute task 421-1 to be scheduled has been determined), the selection logic 435 (which may also be referred to as placement logic, arbitration logic, and/or distribution logic) may select a compute device 402 to which to assign the next task 421-1. The selection logic 435 may select the compute device 402 to which to assign the next task 421-1 based on one or more task characteristics 428 of the next task 421-1, one or more system characteristics 429 of the compute system 400, and/or a combination of the one or more task characteristics 428 of the next task 421-1 and one or more system characteristics 429 of the compute system 400, and/or the like. For example, in a situation in which the compute system 400 may implement a performance policy, the selection logic 435 may determine a performance compatibility of the next task 421-1 by accessing a list of compute devices 402 having a performance compatibility with the next task 421-1. If the list has more than one compute device 402 having a performance compatibility with the next task 421-1, the selection logic 435 may select a compute device 402 having relatively high (e.g., best) performance compatibility with the next task 421-1. (In some embodiments, in a situation in which the compute system 400 may implement a performance policy, the selection logic 435 may disregard an efficiency compatibility and/or a latency compatibility of the next task 421-1. Similarly, in a situation in which the compute system 400 may implement an efficiency policy, the selection logic 435 may disregard a performance compatibility and/or a latency compatibility of the next task 421-1.)

For purposes of illustration, the scheduling algorithm 433 may be assumed to select compute device 402-1 to assign the next task 421-1 to (e.g., to schedule the next task 421-1 on).

Based on selecting a compute device 402-1, the assignment logic 404 may assign the next task 421-1 to the selected compute device 402-1 (e.g., may schedule the next task 421-1 on the selected compute device 402-1) as shown by arrow 436. The assignment logic 404 may assign and/or schedule the next task 421-1, for example, by sending one or more instructions, indications, and/or the like to the compute device 402-1, by compiling code for the compute task 421-1 on the selected compute device 402-1, by notifying an execution environment of the assignment, by notifying a scheduler (e.g., of an operating system) of the assignment, by placing the compute task 421-1 in a queue (e.g., for the compute device 402-1), and/or in any other suitable manner.

Additionally, or alternatively, the assignment logic 404 may use one or more additional task characteristics 428 of the next task 421-1 and/or system characteristics 429 of the system 400 to determine how to assign the next task 421-1. For example, based on the selected compute device 402-1 being busy and/or currently performing a compute task having a higher priority than the next task 421-1, the assignment logic 404 may store the next task 421-1 in the waiting queue 434 as shown by arrow 437. Upon completion of the current and/or higher priority task by the selected compute device 402-1, the assignment logic 404 may schedule the next task 421-1 on the selected compute device 402-1 as shown by arrow 438. Additionally, or alternatively, the assignment logic 404 may move the next task 421-1 from the waiting queue 434 to the ready queue 432 as shown by arrow 440, for example, after a time-out period spent in the waiting queue.

Additionally, or alternatively, based on the selected compute device 402-1 currently performing a compute task having a lower priority than the next task 421-1, the assignment logic 404 may preempt the lower priority task, for example, by moving the lower priority task to the waiting queue 434 as shown by arrow 441 and scheduling the next task 421-1 on the selected compute device 402-1 as shown by arrow 436. Upon completion of the (higher priority) next task 421-1 by the selected compute device 402-1, the assignment logic 404 may move the preempted compute task from the waiting queue 434 back to the selected compute device 402-1 as shown by arrow 438.

Additionally, or alternatively, based on the selected compute device 402-1 being busy and/or currently performing a compute task having a higher priority than the next task 421-1, the assignment logic 404 may determine a different performance compatibility of the next task 421-1. For example, the assignment logic 404 may select a compute device 402-2 having a relatively lower performance compatibility (e.g., lower performance) with the next task 421-1 and scheduling the next task 421-1 on the selected compute device 402-2.

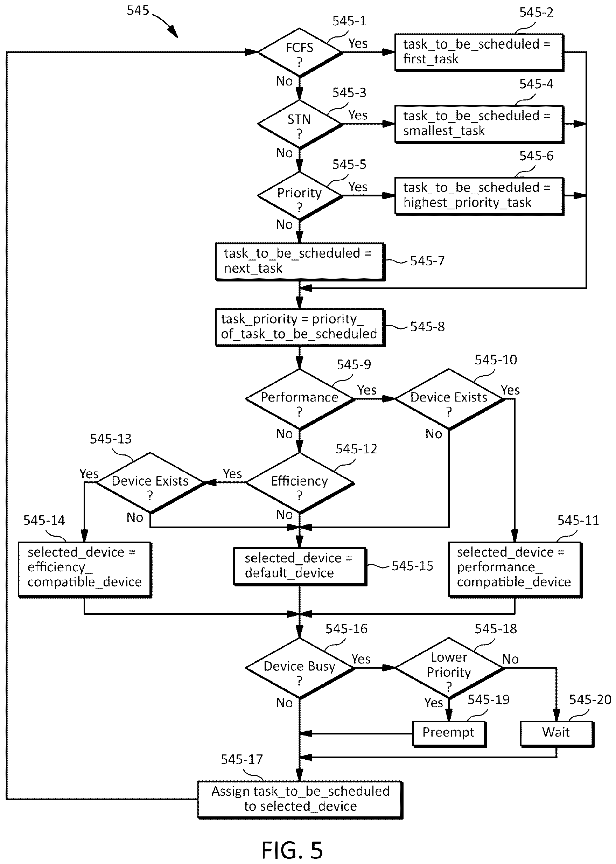

Table 1 illustrates pseudocode for an example embodiment of a compute task assignment scheme in accordance with example embodiments of the disclosure. The pseudocode illustrated in Table 1 may be used to implement, and/or may be implemented with, any of the assignment schemes disclosed herein, including those described with respect to any of the drawings. For example, the pseudocode illustrated in Table 1 may be used to implement the compute task assignment schemes 330 and/or 430 illustrated in Fig. 3 and Fig. 4, respectively. Although the embodiment of the compute task assignment scheme described with respect to the pseudocode illustrated in Table 1 is not limited to any specific implementation details, one or more aspects of the pseudocode illustrated in Table 1 may be understood with reference to the flow chart of the embodiment of a compute task assignment scheme illustrated and/or described with respect to Fig. 5.

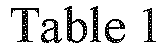

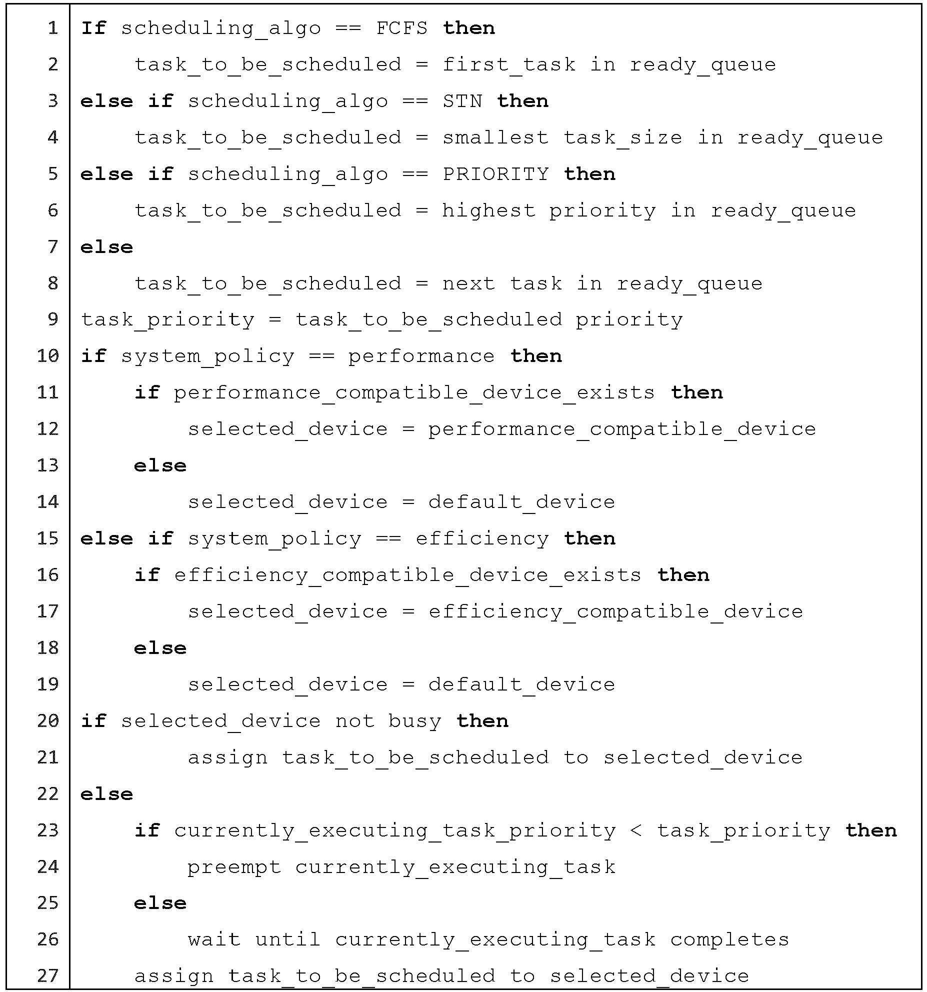

Fig. 5 illustrates a flow chart of an embodiment of a method for assigning a compute task to a compute device in accordance with example embodiments of the disclosure. The method 545 illustrated in Fig. 5 may be used to implement, or may be implemented with, any of the assignment schemes disclosed herein, including those described with respect to other drawings and/or Table 1. For purposes of illustration, the method illustrated in Fig. 5 may be described in the context of the compute task assignment scheme 430 illustrated in Fig. 4 and/or the pseudocode illustrated in Table 1, but the method illustrated in Fig. 5 is not limited to these or any other implementation details.

Referring to Fig. 5, the method may begin at operation 545-1 at which the method may determine if a compute system is implementing a first-come-first-serve (FCFS) scheduling algorithm (e.g., line 1 of Table 1). If the scheduling algorithm is FCFS, the method may proceed to operation 545-2 at which it may initialize a task_to_be_scheduled variable with the first task that was placed in the ready queue 432 (e.g., line 2 of Table 1) and proceed to operation 545-8. If the scheduling algorithm is not FCFS, the method may proceed to operation 545-3.

At operation 545-3, the method may determine if a compute system is implementing a shortest task next (STN) scheduling algorithm (e.g., line 3 of Table 1). If the scheduling algorithm is STN, the method may proceed to operation 545-4 at which it may initialize the task_to_be_scheduled variable with the smallest size task in the ready queue 432 (e.g., line 4 of Table 1) and proceed to operation 545-8. If the scheduling algorithm is not STN, the method may proceed to operation 545-5.

At operation 545-5, the method may determine if a compute system is implementing a priority scheduling algorithm (e.g., line 5 of Table 1). If the scheduling algorithm is priority based, the method may proceed to operation 545-6 at which it may initialize the task_to_be_ scheduled variable with the highest priority task in the ready queue 432 (e.g., line 6 of Table 1) and proceed to operation 545-8. If the scheduling algorithm is not priority based, the method may proceed to operation 545-7.

At operation 545-7, the method may initialize the task_to_be_scheduled variable with the next task in the ready queue 432 (e.g., line 8 of Table 1), for example, using a round robin scheduling algorithm which may be used as a default scheduling algorithm.

At operation 545-8, the method may initialize a task_priority variable with a priority of the task_to_be_scheduled (e.g., line 9 of Table 1).

At operation 545-9, the method may determine if the compute system 400 is implementing a performance policy (e.g., line 10 of Table 1). If the compute system 400 is implementing a performance policy, the method may proceed to operation 545-10 (e.g., line 11 of Table 1) at which the method may determine if the compute system 400 includes a compute device 402 having a performance compatibility with the task_to_be_scheduled (e.g., performance compatible device exists=rtrue). The method may perform this determination, for example, by checking a performance compatibility list for the task_to_be_scheduled (e.g., next task 421-1 in Fig. 4) and/or a system topology data structure for the compute system 400. In some embodiments, if a performance compatibility list for the task_to_be_scheduled includes more than one compute device, and the first compute device in the list is not present in the compute system 400, the method may check if a different compute device in the list is present in the compute system 400.

If, at operation 545-10, the method determines that the compute system 400 includes a compute device having a performance compatibility with the task_to_be_scheduled (e.g., compute device 402-1 in Fig 4), the method may proceed to operation 545-11 at which it may initialize a selected_device variable with the performance compatible device (e.g., line 12 of Table 1) and proceed to operation 545-16.

If, however, at operation 545-10, the method determines that the compute system 400 does not include a compute device having a performance compatibility with the task_to_be_scheduled, the method may proceed to operation 545-15 at which it may initialize the selected_device variable with a default compute device (e.g., line 14 of Table 1).

If, at operation 545-9, the method determines the compute system 400 is not implementing a performance policy, the method may proceed to operation 545-12 at which the method may determine if the compute system 400 is implementing an efficiency policy (e.g., line 15 of Table 1). If the compute system 400 is implementing an efficiency policy, the method may proceed to operation 545-13 at which the method may determine if the compute system 400 includes a compute device 402 having an efficiency compatibility with the task_to_be_scheduled (e.g., line 16 of Table 1). The method may perform this determination, for example, by checking an efficiency compatibility list for the task_to_be_scheduled (e.g., next task 421-1 in Fig. 4) and/or a system topology data structure for the compute system 400. In some embodiments, if an efficiency compatibility list for the task_to_be_scheduled includes more than one compute device, and the first compute device in the list is not present in the compute system 400, the method may check if a different compute device in the list is present in the compute system 400.

If, at operation 545-13, the method determines that the compute system 400 includes a compute device having an efficiency compatibility with the task _to_be_scheduled (e.g., compute device 402-1 in Fig 4), the method may proceed to operation 545-14 at which it may initialize the selected_device variable with the efficiency compatible device (e.g., line 17 of Table 1) and proceed to operation 545-16.

If, however, at operation 545-13, the method determines that the compute system 400 does not include a compute device having an efficiency compatibility with the task_to_be_scheduled, the method may proceed to operation 545-15 at which it may initialize the selected_device variable with a default compute device (e.g., line 14 of Table 1).

At operation 545-16, the method may determine if the selected_device is busy (e.g., line 20 of Table 1). If the selected_device is not busy, the method may proceed to operation 545-17 (e.g., line 27 of Table 1) at which it may assign the task_to_be_scheduled (e.g., next task 421-1 in Fig. 4) to the selected_device (e.g., compute device 402-1 in Fig 4) which may begin execution of the task_to_be_scheduled.

If, however, at operation 545-16, the method determines that the selected_device is busy, it may proceed to operation 545-18 at which it may compare a priority of a task currently executing on the selected_device with the priority of the task_to_be_scheduled (e.g., line 23 of Table 1). If the priority of the task currently executing on the selected_device is lower than the priority of the task_to_be_scheduled, the method may proceed to operation 545-19 (e.g., line 24 of Table 1) at which it may preempt the currently executing task (e.g., by placing the currently executing task in a waiting queue 434). The method may proceed to operation 545-17 (e.g., line 27 of Table 1) at which it may assign the task_to_be_scheduled to the selected_device which may begin execution of the task_to_be_scheduled.

If, however, at operation 545-18, the method determines that the priority of the task currently executing on the selected_device is higher than or equal to the priority of the task_to_be_scheduled, the method may proceed to operation 545-20 (e.g., line 26 of Table 1) where it may wait until the task currently executing on the selected_device is completed. Upon completion of the currently executing task, the method may proceed to operation 545-17 at which it may assign the task_to_be_scheduled to the selected_device which may begin execution of the task_to_be_scheduled.

In some embodiments, the method may proceed from operation 545-17 to operation 545-1 and repeat (e.g., continuously) the method 545.

In some embodiments, rather than waiting at operation 545-20, the method may determine if the compute system 400 includes a second compute device having a compatibility with the task_to_be_scheduled, and if so, assigning the task_to_be_scheduled to the second compute device.

In some embodiments, the method 545 may include one or more operations to assign the task_to_be_scheduled to a compute device based on a size of the task_to_be_scheduled.

In some embodiments, the method 545 may include one or more operations to modify a policy, clock speed, and/or the like, of the compute system 400, and reassign the task_to_be_scheduled to a different compute device based on the modified policy, clock speed, and/or the like.

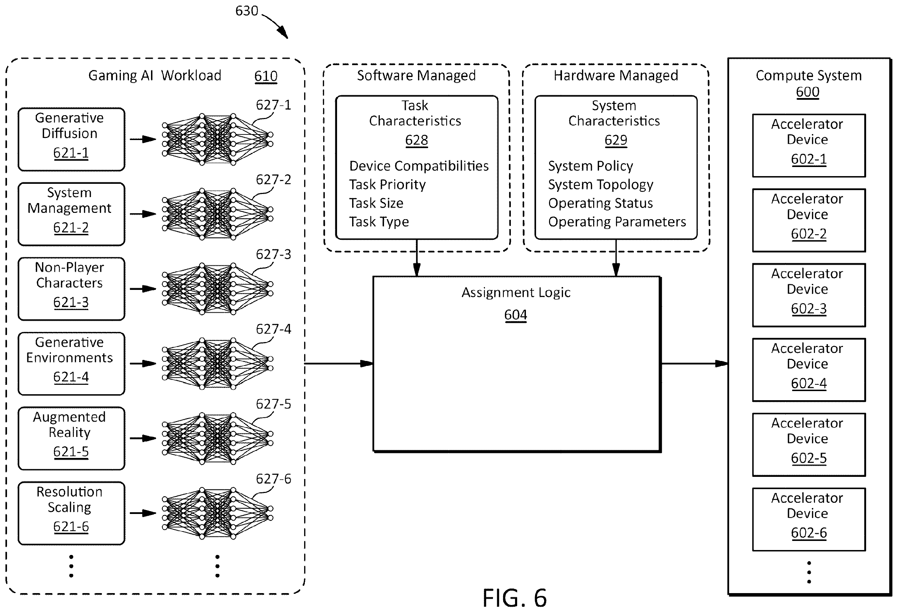

Fig. 6 illustrates an example embodiment of a scheme for assigning one or more machine learning tasks to one or more compute devices in accordance with example embodiments of the disclosure. The scheme 630 illustrated in Fig. 6 may be used to implement, and/or may be implemented with, any of the assignment schemes disclosed herein, including those described with respect to other drawings in which similar elements may be indicated by reference numbers ending in, and/or containing, the same digits, letters, and/or the like. For example, the scheme 630 illustrated in Fig. 6 may be used to implement an example embodiment of the compute task assignment scheme 330 illustrated in Fig. 3 in which the compute workload 310 may be implemented as a gaming AI workload.

Referring to Fig. 6, a gaming AI workload 610 may include one or more AI inference tasks 621-1, 621-2, ... similar to those illustrated and/or described with respect to Fig. 1. One or more of the inference tasks 621-1, 621-2, ... may use one or more inference models 627-1, 627-2, ..., respectively. The inference task assignment scheme 630 may include assignment logic 604 that may be implemented, for example, with a scheduler similar to that illustrated and/or described with respect to Fig. 4. One or more compute devices may be configured as inference accelerators 602-1, 602-2, ....

The assignment logic 604 may assign one or more of the inference tasks 621-1, 621-2, ... to one or more inference accelerators 602-1, 602-2, ... which may run one or more inference models 627-1, 627-2, ... corresponding to inference tasks 621-1, 621-2, ..., respectively. The assignment logic 604 may assign the inference tasks 621 based on one or more inference task characteristics 628 (which may be at least partially software managed) and/or one or more system characteristics 629 (which may be at least partially hardware managed).

Depending on the implementation details, the inference task assignment scheme 630 may exploit one or more inference task device compatibilities to assign one or more of the inference tasks 621 to one or more inference accelerators 602 that may have improved (e.g., optimized) power and/or performance characteristics for the specific inference tasks assigned to them. Additionally, or alternatively, the inference task assignment scheme 630 may improve (e.g., maximize) hardware utilization, for example, by providing flexible placement of one or more inference tasks 621 on a compute system 600 having a varied (e.g., heterogeneous) accelerator topology. Additionally, or alternatively, the inference task assignment scheme 630 may enable the operation of the compute system 600 and/or one or more inference accelerators 602 to be tuned to one or more specific power and/or performance targets.

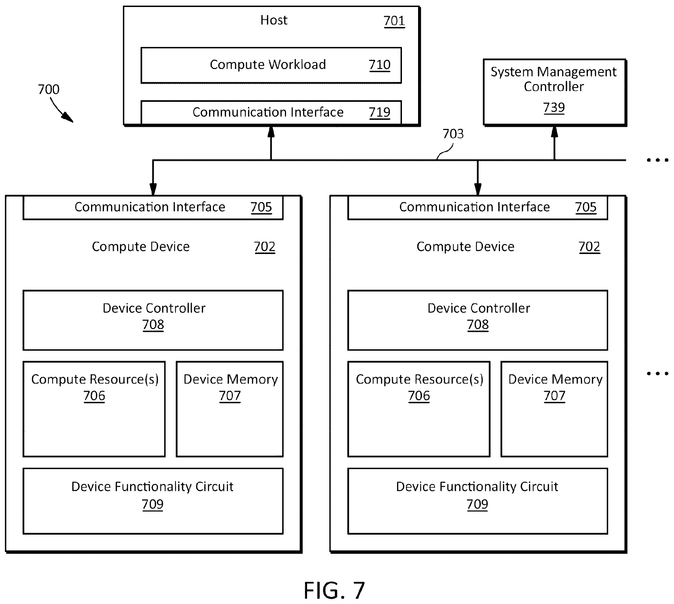

Fig. 7 illustrates an embodiment of a compute system in accordance with example embodiments of the disclosure. The compute system 700 illustrated in Fig. 7 may be used to implement, and/or implemented with, any of the assignment schemes disclosed herein, including those described with respect to other drawings in which similar elements may be indicated by reference numbers ending in, and/or containing, the same digits, letters, and/or the like.

The compute system 700 illustrated in Fig. 7 may include a host 701, one or more compute devices 702, and/or a system management controller 739 that may be configured to communicate using one or more communication connections 703. In some embodiments, the host 701 may be implemented with more than one host which may be referred to individually and/or collectively as host 701.

The system management controller 739 may include any or all of the logic that may implement any of the compute task assignment schemes disclosed herein, including any or all of the logic included in the system manager 139 illustrated and/or described with respect to Fig. 1 and/or any of the assignment logic 304, 404, and/or 604 illustrated and/or described with respect to Fig. 3, Fig. 4, and/or Fig. 6. Any or all of the logic implemented with, or used to implement, the system management controller 739 may be located anywhere including at least partially at a component 739 as illustrated in Fig. 7, at a host 701, at one or more compute devices 702, and/or at any other location, or a combination thereof (e.g., distributed at different components).

Any of the components illustrated and/or described with respect to Fig. 7 may be arranged individually and/or in groups at any locations such as one or more nodes, servers, chassis, racks, clusters, datacenters, edge datacenters, and/or the like. In some embodiments, an arrangement of one or more devices, whether located individually, in nodes, and/or the like, may be referred to and/or characterized as a cluster.

Although the one or more communication connections 703 may be illustrated as being separate from other components, in some embodiments, one or more other components may be integral with, and/or configured within, the one or more communication connections 703, between one or more other components using the one or more communication connections 703, and/or the like. For example, in some embodiments, the system management controller 739 may be located between portions of the one or more communication connections 703.

The one or more communication connections 703 may implement, and/or be implemented with, one or more interconnects, one or more networks, a network of networks (e.g., an internet), and/or the like, or a combination thereof, using any type of interface, protocol, and/or the like. For example, the one or more communication connections 703 may implement, and/or be implemented with, any type of wired and/or wireless communication medium, interface, network, interconnect, protocol, and/or the like including PCIe, NVMe, NVMe over Fabric (NVMe-oF), Compute Express Link (CXL), and/or a coherent protocol such as CXL.mem, CXL.cache, CXL.io and/or the like, Gen-Z, Open Coherent Accelerator Processor Interface (OpenCAPI), Cache Coherent Interconnect for Accelerators (CCIX), and/or the like, Advanced eXtensible Interface (AXI), Direct Memory Access (DMA), Remote DMA (RDMA), RDMA over Converged Ethernet (ROCE), Advanced Message Queuing Protocol (AMQP), Ethernet, Transmission Control Protocol/Internet Protocol (TCP/IP), FibreChannel, InfiniBand, Serial ATA (SATA), Small Computer Systems Interface (SCSI), Serial Attached SCSI (SAS), iWARP, any generation of wireless network including 2G, 3G, 4G, 5G, 6G, and/or the like, any generation of Wi-Fi, Bluetooth, near-field communication (NFC), and/or the like, or any combination thereof. In some embodiments, a communication connection 703 may include one or more switches, hubs, nodes, routers, and/or the like.

A host 701 may be implemented with any component or combination of components that may utilize one or more features of a compute device 702. For example, a host may be implemented with one or more of a server, a storage node, a compute node, a central processing unit (CPU), a workstation, a personal computer, a tablet computer, a smartphone, and/or the like, or multiples and/or combinations thereof. In some embodiments, a host 701 may include one or more communication interfaces 705 that may be used to implement any or all of the one or more communication connections 703.

In some embodiments, a host 701 may be a source of one or more compute workloads 710 having one or more compute tasks that may be assigned to one or more compute devices 702, e.g., by system management controller 739.

A compute device 702 may include a communication interface 705, memory 707 (some or all of which may be referred to as device memory), one or more compute resources 706 (which may also be referred to as compute resources), a device controller 708, and/or a device functionality circuit 709. The device controller 708 may control the overall operation of the compute device 702 including any of the operations, features, and/or the like, described herein. For example, in some embodiments, the device controller 708 may execute one or more compute tasks received from the host 701 using one or more compute resources 706.

The communication interface 705 (which, in some embodiments, may be implemented with multiple communication interfaces 705) may be used to implement any or all of the one or more communication connections 703.

The device functionality circuit 709 may include any hardware to implement a primary function of the compute device 702. For example, if the compute device 702 is implemented as a storage device (e.g., a computational storage device), the device functionality circuit 709 may include storage media such as magnetic media (e.g., if the compute device 702 is implemented as an HDD or a tape drive), solid state media (e.g., one or more flash memory devices), optical media, and/or the like. For instance, in some embodiments, a storage device may be implemented at least partially as an SSD based on not-AND (NAND) flash memory, persistent memory (PMEM) such as cross-gridded nonvolatile memory, memory with bulk resistance change, phase change memory (PCM), or any combination thereof. In an embodiment in which the compute device 702 is implemented as a storage device, the device controller 708 may include a media translation layer such as a flash translation layer (FTL) for interfacing with one or more flash memory devices. In some embodiments, a computational storage device may be implemented as a computational storage drive, a computational storage processor (CSP), and/or a computational storage array (CSA).

As another example, if the compute device 702 is implemented as a network interface controller (NIC) (e.g., a network interface card), the device functionality circuit 709 may include one or more modems, network interfaces, physical layers (PHYs), medium access control layers (MACs), and/or the like. As a further example, if the compute device 702 is implemented as an accelerator, the device functionality circuit 709 may include one or more accelerator circuits, memory circuits, and/or the like.

The one or more compute resources 706 may be implemented with any component or combination of components that may perform operations on data that may be received, stored, and/or generated at the compute device 702. Examples of compute resources may include combinational logic, sequential logic, timers, counters, registers, state machines, complex programmable logic devices (CPLDs), FPGAs, application specific integrated circuits (ASICs), embedded processors, microcontrollers, CPUs such as complex instruction set computer (CISC) processors (e.g., x86 processors) and/or a reduced instruction set computer (RISC) processors such as ARM processors, GPUs, DPUs, NPUs, TPUs, and/or the like, that may execute instructions stored in any type of memory and/or implement any type of execution environment such as a container, a virtual machine, an operating system such as Linux, an Extended Berkeley Packet Filter (eBPF) environment, and/or the like, or a combination thereof.

The memory 707 may be used, for example, by one or more of the compute resources 706 to store input data, output data (e.g., computation results), intermediate data, transitional data, and/or the like. The memory 707 may be implemented, for example, with volatile memory such as dynamic random access memory (DRAM), static random access memory (SRAM), and/or the like, as well as any other type of memory such as nonvolatile memory.

In some embodiments, the memory 707 and/or compute resources 706 may include software, instructions, programs, code, and/or the like, that may be performed, executed, and/or the like, using one or more compute resources (e.g., hardware (HW) resources). Examples may include software implemented in any language such as assembly language, C, C++, and/or the like, binary code, FPGA code, one or more operating systems, kernels, environments such as eBPF, and/or the like. Software, instructions, programs, code, and/or the like, may be stored, for example, in memory 707 and/or compute resources 706. Software, instructions, programs, code, and/or the like, may be downloaded, uploaded, sideloaded, pre-installed, built-in, and/or the like, to the memory 707 and/or compute resources 706. In some embodiments, the compute device 702 may receive one or more instructions, commands, and/or the like, to select, enable, activate, execute, and/or the like, software, instructions, programs, code, and/or the like. Examples of compute operations, functions, and/or the like, that may be implemented by the memory 707, compute resources 706, software, instructions, programs, code, and/or the like, may include any type of algorithm, data movement, data management, data selection, filtering, encryption and/or decryption, compression and/or decompression, checksum calculation, hash value calculation, cyclic redundancy check (CRC), weight calculations, activation function calculations, training, inference, classification, regression, and/or the like, for artificial intelligence, machine learning, neural networks, and/or the like.

A compute device 702 or any other component disclosed herein may be implemented in any physical form factor. Examples of form factors may include a 3.5 inch, 2.5 inch, 1.8 inch, and/or the like, storage device (e.g., storage drive) form factor, M.2 device form factor, Enterprise and Data Center Standard Form Factor (EDSFF) (which may include, for example, E1.S, E1.L, E3.S, E3.L, E3.S 2T, E3.L 2T, and/or the like), add-in card (AIC) (e.g., a PCIe card (e.g., PCIe expansion card) form factor including half-height (HH), half-length (HL), half-height, half-length (HHHL), and/or the like), Next-generation Small Form Factor (NGSFF), NF1 form factor, compact flash (CF) form factor, secure digital (SD) card form factor, Personal Computer Memory Card International Association (PCMCIA) device form factor, and/or the like, or a combination thereof. Any of the compute devices disclosed herein may be connected to a system using one or more connectors such as SATA connectors, SCSI connectors, SAS connectors, M.2 connectors, EDSFF connectors (e.g., connectors compatible with SFF-TA-1002 and/or SFF-TA-1009 such as 1C, 2C, 4C, 4C+, and/or the like), U.2 connectors (which may also be referred to as SSD form factor (SFF) SFF-8639 connectors), U.3 connectors, PCIe connectors (e.g., card edge connectors), and/or the like. In some embodiments, one or more of the compute devices 702 may be implemented as part of an SoC and/or an SIP.

Any of the compute devices disclosed herein may be used in connection with one or more personal computers, smart phones, tablet computers, servers, server chassis, server racks, datarooms, datacenters, edge datacenters, mobile edge datacenters, and/or any combinations thereof.

In some embodiments, a compute device 702 may be implemented with any device that may include, or have access to, memory, storage media, and/or the like, to store data that may be processed by one or more compute resources 706. Examples may include memory expansion and/or buffer devices such as CXL type 2 and/or CXL type 3 devices, as well as CXL type 1 devices that may include memory, storage media, and/or the like.

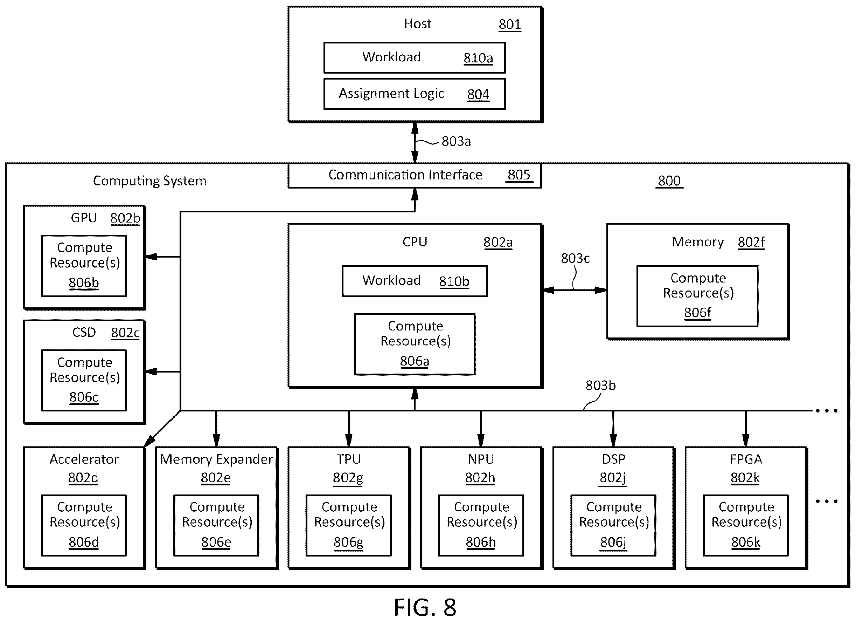

Fig. 8 illustrates an example embodiment of a computing system in accordance with example embodiments of the disclosure. The computing system 800 illustrated in Fig. 8 may be used to implement any of the assignment schemes disclosed herein, including those described with respect to other drawings in which similar elements may be indicated by reference numbers ending in, and/or containing, the same digits, letters, and/or the like.

For purposes of illustration, the computing system 800 illustrated in Fig. 8 may be described in the context of a system in which compute devices may communicate using an interconnect physical (PHY) layer such as a PCIe physical layer with one or more protocols such as a PCIe protocol, CXL.cache, CXL.mem, CXL.io, and/or the like. However, aspects of the disclosure may be implemented with compute devices using any other communication scheme such as compute devices that may communicate using network infrastructure (e.g., a network fabric) based, for example, on an Ethernet protocol.

The computing system 800 may include one or more CPUs 802a, one or more GPUs 802b, one or more computational storage devices 802c, one or more accelerators 802d, one or more memory expanders 802e, one or more memory devices 802f, one or more TPUs 802g, one or more NPUs 802h, one or more DSPs 802j, one or more FPGAs 802k, and/or the like, which may be referred to individually and/or collectively as 802. The one or more CPUs 802a, GPUs 802b, computational storage devices 802c, accelerators 802d, memory expanders 802e, memory devices 802f, TPUs 802g, NPUs 802h, DSPs 802j, and/or FPGAs 802k may include compute resources 806a, 806b, 806c, 806d, 806e, 806f, 806g, 806h, 806j, and/or 806k, respectively, which may be referred to individually and/or collectively as 806.

Fig. 8 also illustrates a host 801 which may be separate from and/or integrated with, the computing system 800. For example, in some embodiments, a host 801 may be implemented as a separate component that may run a compute workload 810a that may offload one or more compute tasks to one or more compute devices 802 in the computing system 800. In some other embodiments, a CPU 802a may function as a host that may run a compute workload 810b that may offload one or more compute tasks to one or more other compute devices 802. In such an embodiment, a CPU 802a (either the CPU that runs the compute workload 810b or a different CPU) may also function as a compute device. In yet other embodiments, a compute workload 810 may run partially on a separate host 801 and partially on one or more CPUs 802a and offload one or more compute tasks to one or more other compute devices 802.

The computing system 800 may include assignment logic 804 that may implement any or all of the compute task assignment schemes disclosed herein, or one or more portions thereof. In some embodiments, the assignment logic 804 may be located at least partially at host 801 as illustrated in Fig. 8. In some embodiments, some or all of the assignment logic 804 may be located at multiple hosts, at one or more compute devices 802, at a user of the computing system 800, and/or at any other location.

The compute devices 802 may communicate using one or more communication connections 803a which, as mentioned above, in some embodiments, may be implemented using a PCIe physical layer with one or more protocols such as a PCIe protocol, CXL. cache, CXL.mem, CXL.io, and/or the like

In embodiments that use an interconnect physical layer such as a PCIe PHY layer, one or more of the communication connections 803 may be implemented with one or more PCIe fabrics that may include one or more root complexes, switches, retimers, and/or the like. For example, one or more communication connections 803b may be implemented with one or more root complexes at a CPU 802a and/or one or more switches that may enable a CPU 802a to communicate with any of the other compute devices 802, as well as a communication interface 805 (e.g., a network interface card or controller, an interconnect card or controller, and/or the like) that may enable the compute system 800 to communicate with a host 801. In embodiments in which a host 801 may be at least partially separate from the compute system 800, one or more communication connections 803a may be implemented with an interconnect such as PCIe, a network such as Ethernet, and/or the like.

In some embodiments, a compute device 802f may be implemented with a memory module form factor such as a dual inline memory module (DIMM) that may implement one or more communication connections 803c with a memory interface such as a double data rate (DDR) memory interface, a high bandwidth memory (HBM) interface, and/or the like. In such an embodiment, one or more compute resources 806f at a compute device 802f may be implemented, for example, with processing-in-memory (PIM) functionality that may include computing resources on one or more memory dies, on one or more logic dies connected to (e.g., stacked with) one or more memory dies, and/or the like.

Although the compute system 800 is not limited to any specific physical configuration, in some embodiments, the compute system 800 may be implemented with a server such as a compute server, a storage server, and/or the like, configured as one or more chassis, blades, racks, clusters, datacenters, edge datacenters, and/or the like.

The embodiments illustrated herein are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

Any of the functionality described herein, including any of the assignment logic, system management controllers and/or the like, may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, CPLDs, FPGAs, ASICs, CPUs including CISC processors such as x86 processors and/or RISC processors such as ARM processors, GPUs, NPUs, TPUs, and/or the like, executing instructions stored in any type of memory. In some embodiments, one or more components may be implemented as an SOC, a multi-chip module, one or more chiplets (e.g., IC dies) in a package (e.g., an SIP), and/or the like.

Some embodiments disclosed above may be described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

The above embodiments may be modified in arrangement and detail without departing from the scope of the following claims.

## Claims

1. A method comprising:
determining, by at least one processor, a characteristic of a machine learning task;
determining, by the at least one processor, a characteristic of a compute system, wherein the compute system comprises one or more compute devices; and
assigning, by the at least one processor, based on the characteristic of the machine learning task and the characteristic of the compute system, the machine learning task to at least one of the one or more compute devices.

2. The method of claim 1, wherein the characteristic of the machine learning task comprises at least one of a compatibility, priority, order, size, or type.

3. The method of claim 1 or 2, wherein the characteristic of the machine learning task comprises at least one of a performance compatibility, efficiency compatibility, or a latency compatibility.

4. The method of any one of claims 1 to 3, wherein the characteristic of the compute system comprises at least one of a policy, topology, status, operating parameter, or scheduling algorithm.

5. The method of any one of claims 1 to 4, wherein the characteristic of the compute system comprises at least one of a performance policy or efficiency policy.

6. The method of any one of claims 1 to 5, wherein:
the characteristic of the compute system comprises a policy;
the characteristic of the machine learning task comprises:
a first compatibility, based on the policy, with a first one of the one or more compute devices; and
a second compatibility, based on the policy, with a second one of the one or more compute devices; and
the assigning comprises assigning, based on the policy and the first compatibility, the machine learning task to the first one of the one or more compute devices.

7. The method of any one of claims 1 to 5, wherein:
the characteristic of the compute system comprises a first policy and a second policy;
the characteristic of the machine learning task comprises:
a first compatibility, based on the first policy, with a first one of the one or more compute devices; and
a second compatibility, based on the second policy, with a second one of the one or more compute devices; and
the assigning comprises assigning, based on the first policy and the first compatibility, the machine learning task to the first one of the one or more compute devices.

8. The method of any one of claims 1 to 5, wherein:
the machine learning task is a first machine learning task;
the characteristic of the machine learning task is a first characteristic of the first machine learning task; and
the assigning comprises:
selecting, based on the first characteristic of the first machine learning task, a second characteristic of a second machine learning task, and a scheduling algorithm, the first machine learning task; and
assigning, based on the selecting, the first machine learning task to the at least one of the one or more compute devices.

9. The method of any one of claims 1 to 5, wherein the machine learning task is a first machine learning task, the method further comprising:
modifying, based on a priority of the first machine learning task and a priority of a second machine learning task, an operation of the first machine learning task on the at least one of the one or more compute devices; and
assigning, based on the modifying, the second machine learning task to the at least one of the one or more compute devices.

10. The method of any one of claims 1 to 5, further comprising:
determining an operating status of the at least one of the one or more compute devices; and
assigning, based on the operating status, the machine learning task to a data structure.

11. The method of any one of claims 1 to 5, wherein:
the at least one of the one or more compute devices comprises a first one of the one or more compute devices;
the characteristic of the machine learning task comprises:
a first compatibility with the first one of the one or more compute devices; and
a second compatibility with a second one of the one or more compute devices; and
the method further comprises:
determining an operating status of the first one of the one or more compute devices; and
assigning, based on the operating status and the second compatibility, the machine learning task to the second one of the one or more compute devices.

12. The method of any one of claims 1 to 5, wherein:
the characteristic of the machine learning task comprises a size of the machine learning task; and
the assigning comprises assigning, based on the size of the machine learning task, the machine learning task to the at least one of the one or more compute devices.

13. The method of any one of claims 1 to 5, wherein the at least one of the one or more compute devices comprises a first one of the one or more compute devices, the method further comprising:
modifying the characteristic of the compute system; and
assigning, based on the modifying, the machine learning task to a second one of the one or more compute devices.

14. An apparatus comprising:
at least one memory configured to store information for a compute task;
a compute system comprising one or more compute devices; and
at least one processor configured to:
determine, based on the information, a characteristic of the compute task;
determine a characteristic of the compute system; and
assign, based on the characteristic of the compute task and the characteristic of the compute system, the compute task to at least one of the one or more compute devices.

15. The apparatus of claim 14, wherein the characteristic of the compute task comprises a performance compatibility with the at least one of the one or more compute devices.
